(19) Europäisches Patentamt
European Patent Office
Office européen des brevets

(11) **EP 4 664 077 A1**

(12) **EUROPEAN PATENT APPLICATION**
published in accordance with Art. 153(4) EPC

(43) Date of publication:
**17.12.2025 Bulletin 2025/51**

(21) Application number: 24753067.8

(22) Date of filing: **16.01.2024**

(51) International Patent Classification (IPC):
**G01D 5/245** (2006.01)  **G01D 5/244** (2006.01)
**H02K 47/20** (2006.01)

(52) Cooperative Patent Classification (CPC):
**G01D 5/145; G01D 5/244; G01D 5/245;**
**G01P 3/4815; H02K 47/20**

(86) International application number:
**PCT/JP2024/000961**

(87) International publication number:
**WO 2024/166621 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 JP 2023019318**

(71) Applicant: **Panasonic Intellectual Property Management Co., Ltd.**
**Kadoma-shi, Osaka 571-0057 (JP)**

(72) Inventors:
• **MURAKAMI, Kimihiro**
  **Osaka 571-0057 (JP)**
• **MURANISHI, Tomoyuki**
  **Osaka 571-0057 (JP)**

(74) Representative: **SSM Sandmair Patentanwälte Rechtsanwalt Partnerschaft mbB Joseph-Wild-Straße 20 81829 München (DE)**

(54) **POWER GENERATION DEVICE, ROTATION ANGLE DETECTOR, AND METHOD FOR MANUFACTURING POWER GENERATION DEVICE**

(57)    Provided is a power generation device and the like capable of reducing individual differences and non-uniformity in magnetic flux density in a power generation element. The power generation device includes magnet (20) having an annular shape centered on rotation axis line (A), magnet (20) being magnetized in a radial direction of the annular shape and rotatably disposed around the rotation axis line, and power generation element (24) that generates power by using a change in a magnetic field accompanying rotation of magnet (20). A distance from rotation axis line (A) to the center of power generation element (24) is more than or equal to a radius of an inner diameter of magnet (20) and less than or equal to an average value of the radius of the inner diameter and a radius of an outer diameter of magnet (20).

EP 4 664 077 A1

**(Cont. next page)**

# FIG. 1

**Description**

TECHNICAL FIELD

The present disclosure relates to a power generation device, a rotation angle detector, and a method for manufacturing a power generation device.

BACKGROUND ART

Conventionally, there has been known a power generation device including a disk-shaped magnet that rotates around a rotation axis line and a power generation element including a magnetic wire and a coil, and a rotation angle detector using the power generation device. For example, PTL 1 discloses a rotation angle detector including a disk-shaped magnet provided on a shaft and three power generators including a magnetic wire and a coil.

Citation List

Patent Literature

PTL 1: Japanese Patent No. 6336232

SUMMARY OF THE INVENTION

In a power generation device used in the rotation angle detector described in PTL 1 or the like, an individual difference in magnetic flux density in a power generation element is generated because of an influence of a manufacturing error, an assembly error, and the like of each component. In addition, because of the non-uniformity of the magnetic flux density in the power generation element, the stability of the power generation amount and the rotation angle (that is, the rotation angle of the magnet with respect to the power generation element) at the time of power generation may degrade. Because of the individual difference and non-uniformity of the magnetic flux density in the power generation element, the detection accuracy of the rotation angle detector using the power generation device may degrade.

The present disclosure has been made to solve such a problem, and an object of the present disclosure is to provide a power generation device capable of reducing the individual difference and non-uniformity of the magnetic flux density in a power generation element, and a rotation angle detector using the power generation device.

A power generation device according to one aspect of the present disclosure includes a magnet having an annular shape centered on a rotation axis line, the magnet being magnetized in a radial direction of the annular shape and rotatably disposed around the rotation axis line, and a power generation element that generates power by using a change in a magnetic field accompanying rotation of the magnet, wherein position deviation rate ε representing a relative position of a center of the power generation element with respect to the magnet is defined by a formula shown below, where r is a distance from the rotation axis line to the center of the power generation element, and R1 and R2 are a radius of an inner diameter of the magnet and a radius of an outer diameter of the magnet, respectively,

[Mathematical Formula 1]

$$\varepsilon = \frac{r - (R1 + R2)/2}{R2 - R1} \times 100$$

where $-50 \leq \varepsilon \leq 0$ holds for position deviation rate $\varepsilon$.

A rotation angle detector according to another aspect of the present disclosure includes the power generation device and an address information acquisition unit that is driven using an electromotive force of the power generation element and acquires address information corresponding to a rotation angle of the magnet.

A method for manufacturing a power generation device according to another aspect of the present disclosure is a method for manufacturing a power generation device, the power generation device including a magnet having an annular shape centered on a rotation axis line, the magnet being magnetized in a radial direction of the annular shape and rotatably disposed around the rotation axis line, and a power generation element that generates power by using a change in a magnetic field accompanying rotation of the magnet, the method for manufacturing a power generation device including a determination step of determining a position of a center of the power generation element based on a radius of an inner diameter of the magnet and a radius of an outer diameter of the magnet, and a disposition step of disposing the power generation element and the magnet based on the position determined in the determination step, wherein position deviation rate ε representing a relative position of the center of the power generation element with respect to the magnet is defined by a formula shown below, where r is a distance from the rotation axis line to the center of the power generation element, and R1 and R2 are the radius of the inner diameter of the magnet and the radius of the outer diameter of the magnet, respectively,

[Mathematical Formula 2]

$$\varepsilon = \frac{r - (R1 + R2)/2}{R2 - R1} \times 100$$

and in the determination step, the position of the center of the power generation element is determined to hold $-50 \leq \varepsilon \leq 0$ for position deviation rate ε.

The power generation device, the rotation angle detector, and the method for manufacturing a power generation device of the present disclosure can provide a power generation device, a rotation angle detector, and a method for manufacturing a power generation device capable of reducing the individual difference and non-uniformity of the magnetic flux density in a power generation element.

BRIEF DESCRIPTION OF THE DRAWINGS

Fig. 1 is a schematic sectional view illustrating an overall configuration of a power generation device and a rotation angle detector according to a first exemplary embodiment.

Fig. 2 is a schematic plan view illustrating an overall configuration of the power generation device and the rotation angle detector according to the first exemplary embodiment.

Fig. 3 is a diagram for describing a definition of an angle corresponding to a relative position between a magnet and a power generation element according to the first exemplary embodiment.

Fig. 4 is a plan view illustrating a positional relationship between the power generation element and the magnet of the power generation device according to the first exemplary embodiment.

Fig. 5 is a side view illustrating a positional relationship between the power generation element and the magnet of the power generation device according to the first exemplary embodiment.

Fig. 6 is a first diagram illustrating a relationship between the rotational position of the magnet and the distribution of the magnetic flux density in a longitudinal direction of the power generation element according to the first exemplary embodiment.

Fig. 7 is a second diagram illustrating the relationship between the rotational position of the magnet and the distribution of the magnetic flux density in the longitudinal direction of the power generation element according to the first exemplary embodiment.

Fig. 8 is a third diagram illustrating the relationship between the rotational position of the magnet and the distribution of the magnetic flux density in the longitudinal direction of the power generation element according to the first exemplary embodiment.

Fig. 9 is a graph illustrating a relationship between a position in the power generation element according to the first exemplary embodiment and the magnetic flux density at the start of power generation.

Fig. 10 is a first graph illustrating a relationship between the distance from the power generation element to the magnet and the magnetic flux density difference according to the first exemplary embodiment.

Fig. 11 is a second graph illustrating the relationship between the distance from the power generation element to the magnet and the magnetic flux density difference according to the first exemplary embodiment.

Fig. 12 is a graph illustrating a relationship between a position deviation rate and the average value of magnetic flux density differences of the power generation device according to the first exemplary embodiment.

Fig. 13 is a graph illustrating a relationship between the position deviation rate and the standard deviation of magnetic flux density differences of the power generation device according to the first exemplary embodiment.

Fig. 14 is a flowchart illustrating a flow of a method for manufacturing the power generation device according to the first exemplary embodiment.

Fig. 15 is a schematic sectional view illustrating an overall configuration of a rotation angle detector according to a second exemplary embodiment.

Fig. 16 is a schematic plan view illustrating a configuration of a magnet according to a first modification.

Fig. 17 is a schematic plan view illustrating a configuration of a magnet according to a second modification.

DESCRIPTION OF EMBODIMENT

Hereinafter, exemplary embodiments of the present disclosure will be described. The exemplary embodiments to be described below each illustrate one specific example of the present disclosure. Thus, numerical values, constituent elements, arrangement positions and connection modes of the constituent elements, steps, order of the steps, and the like illustrated in the following exemplary embodiments are merely examples, and are not intended to limit the present disclosure. Thus, among the constituent elements in the following exemplary embodiments, constituent elements that are not described in independent claims indicating the highest concept of the present disclosure are described as optional constituent elements.

Each of the drawings is a schematic diagram, and is not necessarily strictly illustrated. In each drawing, substantially identical components are denoted by identical reference signs, and repetitive explanations thereof will be omitted or simplified.

In the present specification, terms indicating a relationship between elements such as equal and symmetric, and terms indicating a shape of elements such as orthogonal, parallel, plate-like, circular, annular, cylindrical, disk-like, and arcuate are not expressions representing only strict meanings, but are expressions meaning to include substantially equivalent ranges, for example, differences of about several %.

(First exemplary embodiment)

A power generation device, a rotation angle detector, and a method for manufacturing a power generation device according to a first exemplary embodiment will be described.

[1-1. Overall configuration of power generation device and rotation angle detector]

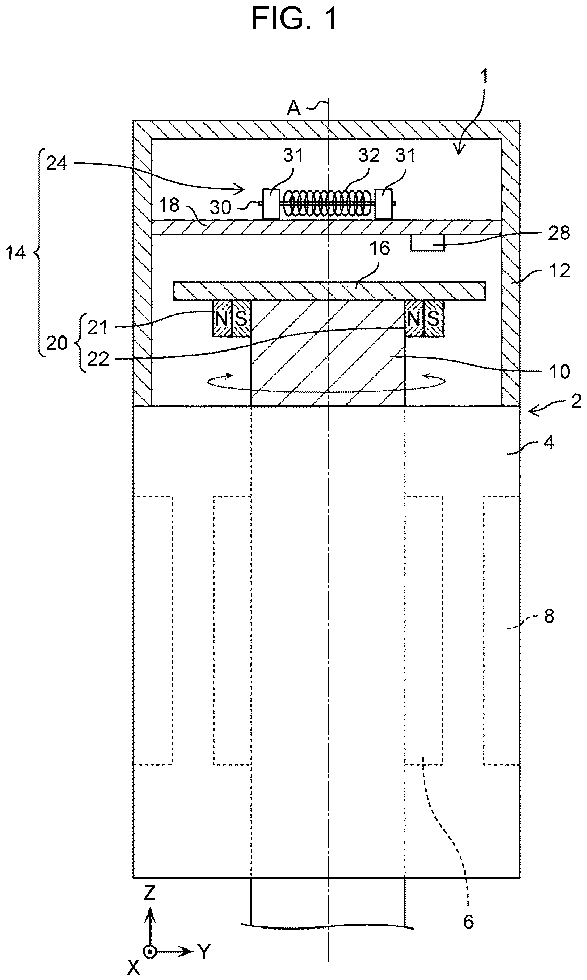

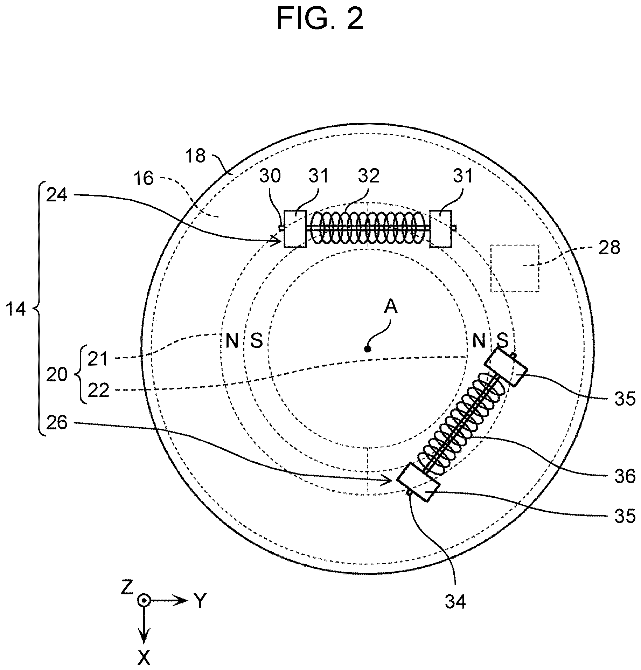

An overall configuration of a power generation device and a rotation angle detector according to the present exemplary embodiment will be described with reference to Fig. 1. Fig. 1 is a schematic sectional view illustrating an overall configuration of power generation device 14 and rotation angle detector 1 according to the present exemplary embodiment. Fig. 1 also illustrates a side view of motor 2 to which rotation angle detector 1 is attached. Fig. 2 is a schematic plan view illustrating an overall configuration of power generation device 14 and rotation angle detector 1 according to the present exemplary embodiment. In each drawing, an X axis, a Y axis, and a Z axis orthogonal to each other are illustrated. The X axis, the Y axis, and the Z axis form a right-handed orthogonal coordinate system.

As illustrated in Fig. 1, motor 2 includes body 4, rotor 6, stator 8, rotary shaft 10, and case 12. Rotor 6 and stator 8 are accommodated in body 4. Rotor 6 rotates with respect to stator 8.

Rotary shaft 10 extends in a rotation axis line direction and is a rod-like member having a columnar shape or the like. Here, the rotation axis line direction is a direction in which rotation axis line A, which is the rotation center of rotary shaft 10, extends, and is parallel to the Z-axis direction in each drawing. The axial center of rotary shaft 10 and rotation axis line A coincide with each other. Rotary shaft 10 is fixed to rotor 6. For example, when power is supplied to motor 2, rotary shaft 10 rotates around rotation axis line A together with rotor 6 based on the power. The rotation direction of rotary shaft 10 coincides with a circumferential direction around rotation axis line A. Rotation angle detector 1 is provided at one end of rotary shaft 10 in the rotation axis line direction. A load or the like (not illustrated) rotationally driven by the rotation of rotary shaft 10 is attached to the other end of rotary shaft 10 in the rotation axis line direction. For example, rotary shaft 10 is formed of a magnetic metal such as iron.

Case 12 is attached to body 4 to cover one end of rotary shaft 10 in the rotation axis line direction and rotation angle detector 1. For example, case 12 is formed of a magnetic metal such as iron.

Rotation angle detector 1 is a detector that detects the rotation of rotary shaft 10. For example, rotation angle detector 1 detects a rotational position of rotary shaft 10, a rotation direction of rotary shaft 10, a rotation speed of rotary shaft 10, and the like. As described above, rotation angle detector 1 is provided at one end of rotary shaft 10 in the rotation axis line direction. As illustrated in Figs. 1 and 2, rotation angle detector 1 includes rotary plate 16, substrate 18, power generation device 14, and detection unit 28. Power generation device 14 includes magnet 20 and one or more power generation elements, that is, power generation element 24 and power generation element 26 (see Fig. 2 for power generation element 26).

Rotary plate 16 is a plate-like member extending in a direction orthogonal to the rotation axis line direction. Specifically, rotary plate 16 has a disk shape having a principal surface extending in a direction orthogonal to the rotation axis line direction, and is circular as viewed in the rotation axis line direction. Rotary plate 16 is attached to one end of rotary shaft 10 in the rotation axis line direction. The axial center of rotary plate 16 coincides with rotation axis line A. Rotary plate 16 rotates together with rotary shaft 10.

Substrate 18 is a plate-like member extending in a direction orthogonal to the rotation axis line direction. Specifically, substrate 18 has a disk shape having a principal surface extending in a direction orthogonal to the rotation axis line direction, and is circular as viewed in the rotation axis line direction. Substrate 18 is disposed at an interval from one end of rotary shaft 10 and rotary plate 16 in the rotation axis line direction, and faces rotary plate 16. The axial center of substrate 18 coincides with rotation axis line A. Substrate 18 is fixed to an inner surface of case 12, and does not rotate together with rotary shaft 10.

Magnet 20 has an annular shape centered on rotation axis line A, is magnetized in a radial direction of the annular shape, and is rotatably disposed around rotation axis line A. In the present exemplary embodiment, magnet 20 includes first portion 21 whose inner peripheral portion is an S pole and whose outer peripheral portion is an N pole, and second portion 22 whose outer peripheral portion is an S pole and whose inner peripheral portion is an N pole. With respect to a plane passing through rotation axis line A, one portion of magnet 20 is first portion 21, and the other portion of magnet 20 is second portion 22. That is, first portion 21 and second portion 22 are disposed symmetrically with respect to the plane passing through rotation axis line A.

In the present exemplary embodiment, magnet 20 rotates together with rotary shaft 10. Specifically, when rotary shaft 10 rotates, magnet 20 rotates together with rotary shaft 10 and rotary plate 16. As illustrated in Fig. 1, magnet 20 is disposed on a principal surface of rotary plate 16, the principal surface facing away from substrate 18 (that is, of the two principal surfaces of rotary plate 16, the principal surface farther from substrate 18). Magnet 20 is disposed at a position different from power generation element 24 or power generation element 26 in the rotation axis line direction. As illustrated in Fig. 2, magnet 20 overlaps with substrate 18 as viewed in the rotation axis line direction.

Magnet 20 has a plate shape whose thickness direction is in the rotation axis line direction. Magnet 20 has a principal surface facing power generation element 24 and power generation element 26, and a principal surface corresponding to a back surface of the principal surface.

Each of power generation element 24 and power generation element 26 is an element that generates power by using the change in magnetic field due to the rotation of magnet 20 together with rotary shaft 10. Each of power generation element 24 and power generation element 26 is disposed on the principal surface of substrate 18 facing away from rotary plate 16. Power generation element 24 and power generation element 26 overlap with substrate 18 as viewed in the rotation axis line direction.

Power generation element 24 and power generation element 26 are disposed at positions deviated from rotation axis line A. That is, power generation element 24 and power generation element 26 do not overlap with rotation axis line A as viewed in the rotation axis line direction.

Power generation element 24 and power generation element 26 are disposed with a phase difference in the rotation direction of rotary shaft 10. That is, power generation element 24 and power generation element 26 are disposed at different positions from each other in the rotation direction of rotary shaft 10. The distance from rotation axis line A to power generation element 24 and the distance from rotation axis line A to power generation element 26 in the radial direction around rotation axis line A are equal to each other. The detailed positional relationship between power generation element 24, magnet 20, and power generation element 26 will be described later.

Power generation element 24 extends in a tangential direction of the rotation direction around rotation axis line A (that is, the rotation direction of rotary shaft 10). In other words, power generation element 24 has an elongated shape, and a longitudinal direction of power generation element 24 is in the tangential direction of the rotation direction around rotation axis line A. Power generation element 24 is disposed on a principal surface of substrate 18 facing away from rotary shaft 10 (that is, of the two principal surfaces of substrate 18, the principal surface farther from rotary plate 16). Power generation element 24 includes magnetic sensing unit 30 and coil 32 wound around magnetic sensing unit 30. In the present exemplary embodiment, power generation element 24 further includes two magnetism collection members 31.

Magnetic sensing unit 30 is a magnetic body extending in the tangential direction in the rotation direction around rotation axis line A. For example, magnetic sensing unit 30 is a magnetic member that generates the large Barkhausen effect because of the change in external magnetic field, and is a Wiegand wire extending in the tangential direction of the rotation direction around rotation axis line A. A Wiegand wire is a magnetic body in which when a magnetic field of a value more than or equal to a predetermined value is applied in a longitudinal direction of the Wiegand wire, the directions of magnetization align to direct to one side in the longitudinal direction. When a direction of the magnetic flux flowing in the longitudinal direction of the Wiegand wire changes, the direction of magnetization of the Wiegand wire is rapidly reversed, and a voltage pulse is induced across coil 32 wound around the Wiegand wire. Power generation element 24 thus generates power, and the output of power generation element 24 changes according to the change in the direction of the magnetic field accompanying the rotation of magnet 20 in power generation element 24. The shape of a section perpendicular to the longitudinal direction of magnetic sensing unit 30 is, for example, a circular shape.

Magnetism collection member 31 is an annular magnetic member into which magnetic sensing unit 30 is inserted, and has a magnetism collection function. One of two magnetism collection members 31 is disposed between one end of magnetic sensing unit 30 and coil 32. The other of two magnetism collection members 31 is disposed between the other end of magnetic sensing unit 30 and coil 32. Magnetism collection member 31 includes a soft magnetic material. Magnetism collection member 31 has a low coercive force as compared with magnetic sensing unit 30. Magnetism collection member 31 may have a high permeability and saturation magnetic flux density as compared with magnetic sensing unit 30. In the present exemplary embodiment, magnetism collection member 31 is made of ferrite.

Power generation element 26 extends in the tangential direction in the rotation direction around rotation axis line A. Power generation element 26 includes magnetic sensing unit 34 and coil 36 wound around magnetic sensing unit 34. In the present exemplary embodiment, power generation element 26 further includes two magnetism collection members 35.

Magnetic sensing unit 34 is a magnetic body extending in the tangential direction in the rotation direction around rotation axis line A. For example, magnetic sensing unit 34 is a magnetic body that develops the large Barkhausen effect, and is a Wiegand wire extending in the tangential direction of the rotation direction around rotation axis line A. Power generation element 26 generates power in the same manner as in power generation element 24, and the output of power generation element 26 changes according to the change in the direction of the magnetic field accompanying the rotation of magnet 20 in power generation element 26.

Magnetism collection member 35 is an annular magnetic member into which magnetic sensing unit 34 is inserted, and has a magnetism collection function. One of two magnetism collection members 35 is disposed between one end of magnetic sensing unit 34 and coil 36. The other of two magnetism collection members 35 is disposed between the other end of magnetic sensing unit 34 and coil 36. Magnetism collection member 35 includes a soft magnetic material. Magnetism collection member 35 has a low coercive force as compared with magnetic sensing unit 34. Magnetism collection member 35 may have a high permeability and saturation magnetic flux density as compared with magnetic sensing unit 34. In the present exemplary embodiment, magnetism collection member 35 is made of ferrite.

Detection unit 28 is a processor that detects the rotation angle of magnet 20 based on the outputs of power generation element 24 and power generation element 26. In the present exemplary embodiment, detection unit 28 is disposed on the principal surface of substrate 18 facing rotary plate 16, and is electrically connected to power generation element 24, power generation element 26, and the like. For example, detection unit 28 detects the rotational position (that is, the rotational position of rotary shaft 10) of magnet 20 depending on which of power generation element 24 and power generation element 26 generates power. The detection mode of the rotational position is not limited to this configuration. For example, the rotational position may be detected by a magnetic sensor that operates through power generation of power generation elements 24 and 26, or by combining address information thereof.

[1-2. Magnetic flux density in power generation element]

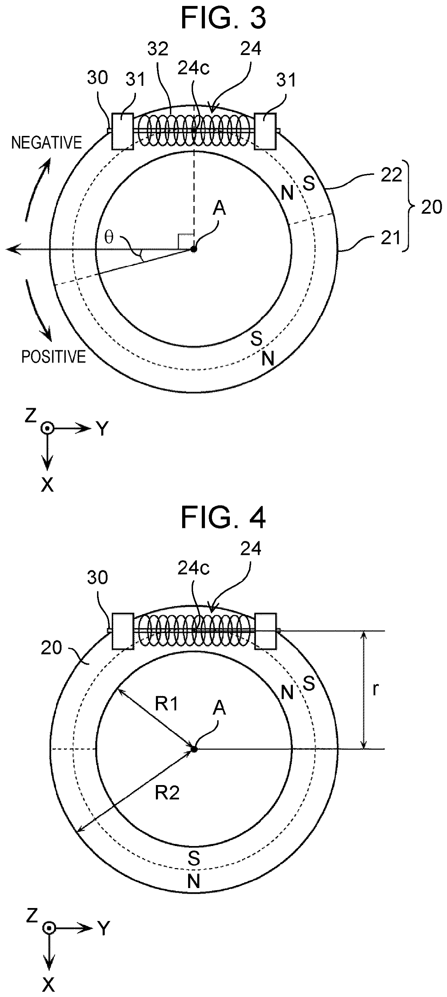

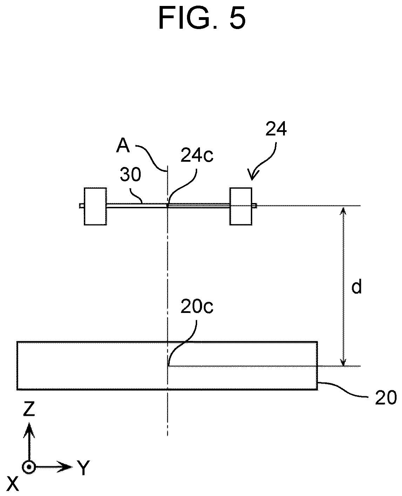

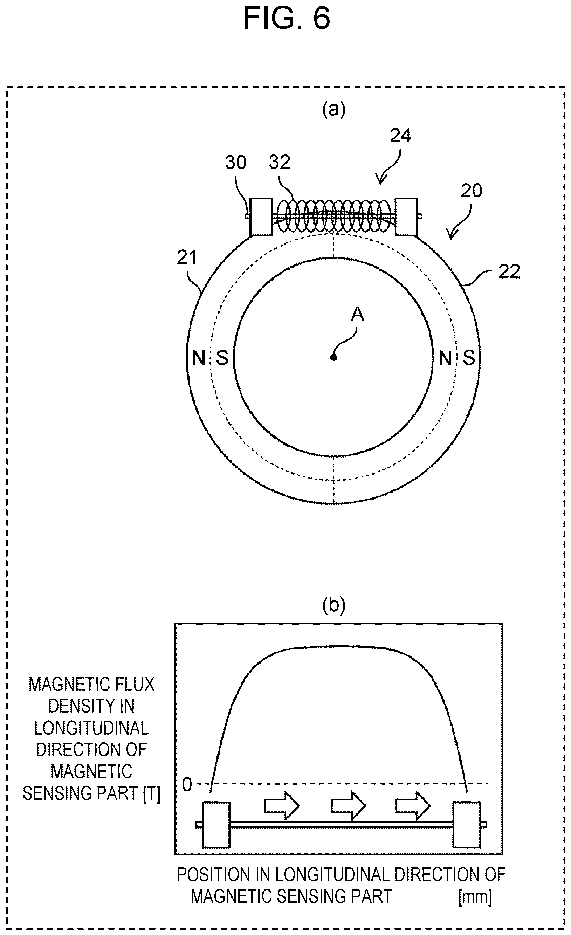

The magnetic flux density in power generation element 24 of power generation device 14 according to the present exemplary embodiment will be described with reference to Figs. 3 to 8 while being compared with the magnetic flux density in power generation element 24 of a power generation device of a comparative example. Fig. 3 is a diagram for describing a definition of angle θ corresponding to a relative position between magnet 20 and power generation element 24 according to the present exemplary embodiment. Figs. 4 and 5 are a plan view and a side view each illustrating a positional relationship between power generation element 24 and magnet 20 of power generation device 14 according to the present exemplary embodiment. In Figs. 4 and 5, position y on the right of center 24c in the longitudinal direction (Y-axis direction) of power generation element 24 is represented by a positive value, and position y on the left is represented by a negative value. Figs. 6 to 8 are diagrams illustrating the relationship between the rotational position of magnet 20 and the distribution of the magnetic flux density in the longitudinal direction of power generation element 24 according to the present exemplary embodiment.

As illustrated in Fig. 3, as viewed in the rotation axis line direction of magnet 20, the angle formed by the longitudinal direction of power generation element 24 (the Y-axis direction in Fig. 3) and the boundary line between first portion 21 and second portion 22 of magnet 20 is defined as angle θ corresponding to the relative position between magnet 20 and power generation element 24. Angle θ in a state where the extending direction of the boundary line between first portion 21 and second portion 22 of magnet 20 coincides with the longitudinal direction of power generation element 24 and power generation element 24 is positioned in the region of second portion 22 of magnet 20 is set to 0 degrees. In the present exemplary embodiment, center 24c of power generation element 24 is defined by a center point of magnetic sensing unit 30. The center point of the magnetic sensing unit 30 is defined by the center of gravity of the section perpendicular to the longitudinal direction at the center of magnetic sensing unit 30 in the longitudinal direction. With the position of power generation element 24 being fixed, angle θ increases as magnet 20 rotates counterclockwise around rotation axis line A, and angle θ decreases as magnet 20 rotates clockwise around rotation axis line A.

As illustrated in Fig. 4, the distance from rotation axis line A to center 24c of power generation element 24 is defined as r [mm]. The radius of the inner diameter and the radius of the outer diameter of magnet 20 are defined as R1 [mm] and R2 [mm], respectively.

As illustrated in Fig. 5, the distance from power generation element 24 to magnet 20 is defined as d [mm]. In the present exemplary embodiment, distance d is the distance from center 24c of power generation element 24 to center 20c of magnet 20 in the rotation axis line direction (that is, in the Z-axis direction).

As illustrated in part (a) of Fig. 6, in a state where angle θ is -90 degrees, magnetic sensing unit 30 of power generation element 24 overlaps with a region including a boundary between first portion 21 and second portion 22 of magnet 20 when viewed from the rotation axis line direction. As illustrated in part (b) of Fig. 6, in the distribution of the magnetic flux density in the longitudinal direction of magnetic sensing unit 30, the peak is not positioned at the central portion in the longitudinal direction of magnetic sensing unit 30, but the distribution is substantially uniform in the vicinity of the central portion in the longitudinal direction of magnetic sensing unit 30.

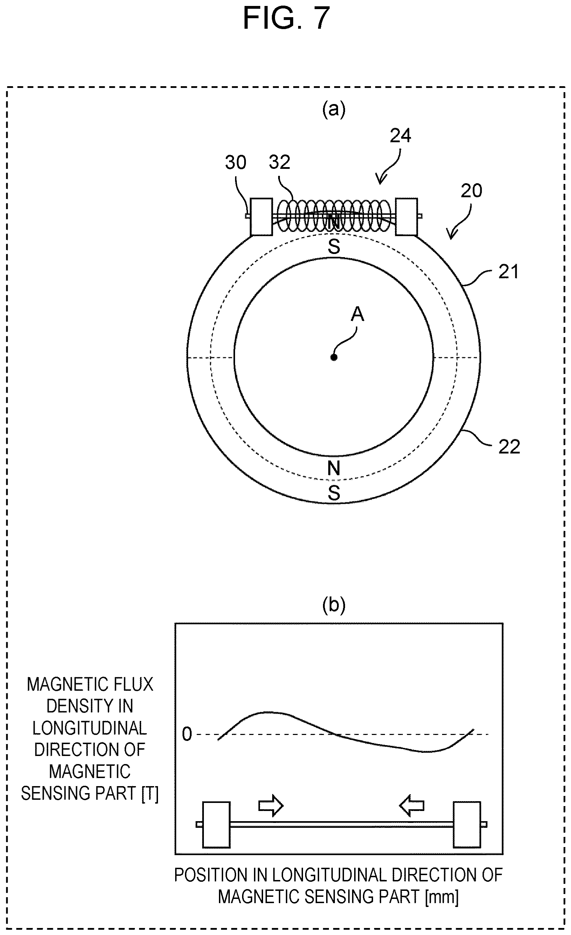

As illustrated in part (a) of Fig. 7, when magnet 20 rotates clockwise from the state illustrated in part (a) of Fig. 6 to a state where angle $\theta$ is -180 degrees (in other words, +180 degrees), magnetic sensing unit 30 of power generation element 24 overlaps with the central portion of the N pole of first portion 21 of magnet 20 when viewed from the rotation axis line direction.

At this time, as illustrated in part (b) of Fig. 7, the distribution of the magnetic flux density in the longitudinal direction of magnetic sensing unit 30 is smaller than that in the state of part (a) of Fig. 6, and is a value close to 0.

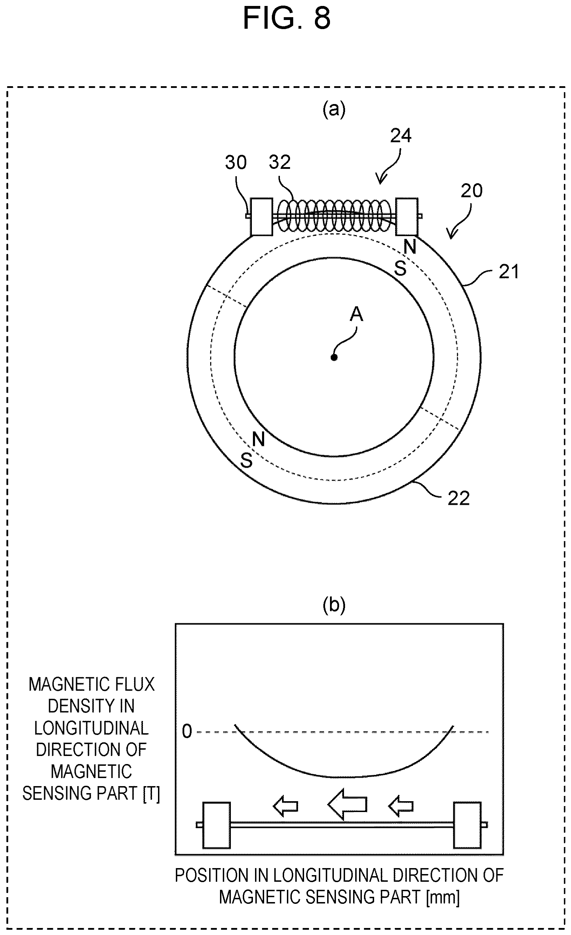

As illustrated in part (a) of Fig. 8, when magnet 20 further rotates clockwise from the state illustrated in part (a) of Fig. 7, for example, angle $\theta$ becomes about +150 degrees (in other words, approximately -210 degrees), power generation element 24 generates a power generation pulse.

At this time, as illustrated in part (b) of Fig. 8, in the distribution of the magnetic flux density in the longitudinal direction of magnetic sensing unit 30, the peak is not located at a position deviated from the central portion in the longitudinal direction of magnetic sensing unit 30, but is located near the central portion in the longitudinal direction of magnetic sensing unit 30.

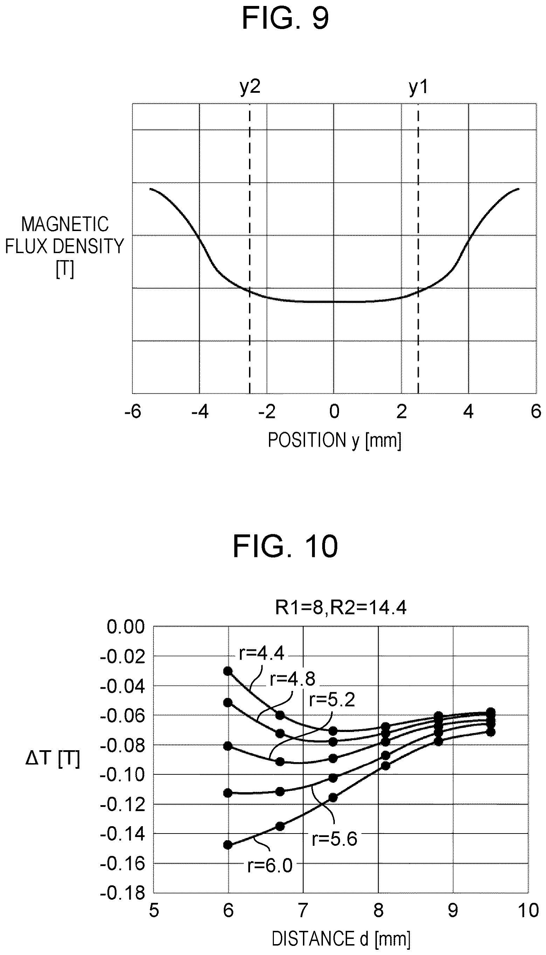

An effect of magnet 20 of power generation device 14 according to the present exemplary embodiment will be described with reference to Fig. 9. Fig. 9 is a schematic graph illustrating the relationship between position y in the longitudinal direction (Y-axis direction) of power generation element 24 according to the present embodiment and the magnetic flux density at the start of power generation.

As illustrated in Fig. 9, in power generation device 14 according to the present exemplary embodiment, the magnetic flux density distribution in power generation element 24 is more uniform with respect to position y in the longitudinal direction of power generation element 24 (Y-axis direction). Thus, magnetic sensing unit 30 can be uniformly magnetized. In addition, as illustrated in Fig. 9, in the present exemplary embodiment, the symmetry of the distribution of the magnetic flux density at the start of power generation with respect to center 24c of power generation element 24 can be enhanced, and thus, the magnetization of entire magnetic sensing unit 30 can be substantially simultaneously inverted at the start of power generation.

For example, the uniformity of the magnetic flux density distribution can be enhanced by disposing power generation element 24 on rotation axis line A, but there is a case where power generation element 24 cannot be disposed on rotation axis line A. In addition, when a plurality of power generation elements are disposed on the same plane perpendicular to rotation axis line A as in power generation device 14 according to the present exemplary embodiment, all the power generation elements cannot be disposed on rotation axis line A.

Magnetic flux density difference $\Delta T$ is used as an index for evaluating the uniformity of the magnetic flux density distribution at the start of power generation in power generation element 24 according to the present exemplary embodiment. Here, magnetic flux density difference $\Delta T$ is defined by a difference in magnetic flux density between both ends of coil 32 of power generation element 24 at the start of power generation (corresponding to positions $y = y1$ and $y = y2$ illustrated in Fig. 9). Positions $y = y1$ and $y = y2$ at both ends in the longitudinal direction of power generation element 24 are set to positions where the distance from an end of coil 32 in the longitudinal direction is more than or equal to 0% and less than or equal to 10% of the length of coil 32, for example. Assuming that the magnetic flux density at position $y = y1$ at the start of power generation is T1 [T], and the magnetic flux density at position $y = y2$ is T2 [T], magnetic flux density difference $\Delta T$ is defined by T1 - T2.

[1-3. Positional relationship between power generation element and magnet]

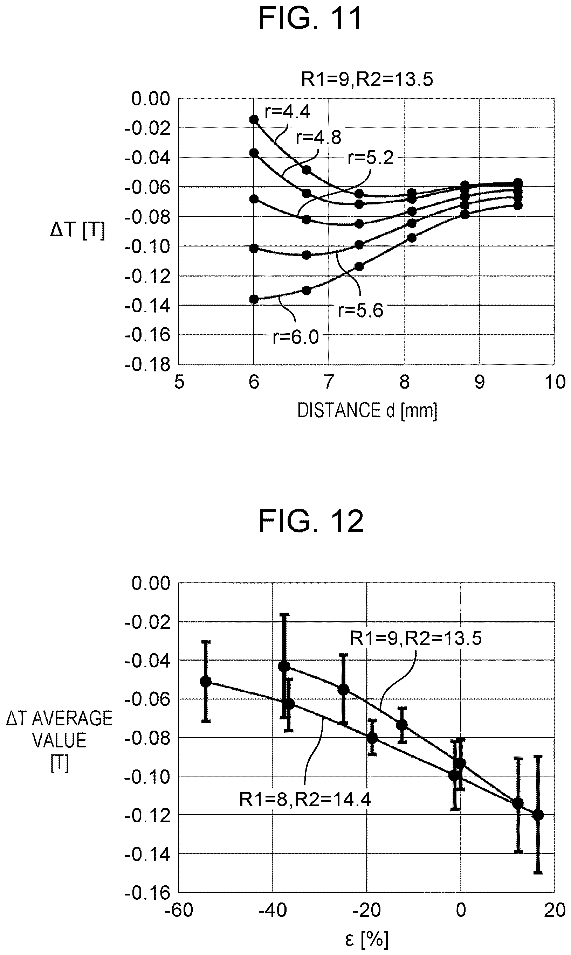

A positional relationship between power generation element 24 and magnet 20 of power generation device 14 according to the present exemplary embodiment will be described with reference to Figs. 10 to 14. Fig. 10 is a first graph illustrating the relationship between distance d from power generation element 24 to magnet 20 and magnetic flux density difference $\Delta T$ according to the present exemplary embodiment. Fig. 10 illustrates a relationship when radius R1 of the inner diameter of magnet 20 is 8 mm and radius R2 of the outer diameter is 14.4 mm. Fig. 11 is a second graph illustrating the relationship between distance d from power generation element 24 to magnet 20 and magnetic flux density difference $\Delta T$ according to the present exemplary embodiment. Fig. 11 illustrates a relationship when radius R1 of the inner diameter of magnet 20 is 9 mm and radius R2 of the outer diameter is 13.5 mm. Figs. 10 and 11 illustrate graphs when distance r from rotation axis line A to center 24c of power generation element 24 is 4.4 mm, 4.8 mm, 5.2 mm, 5.6 mm, and 6.0 mm.

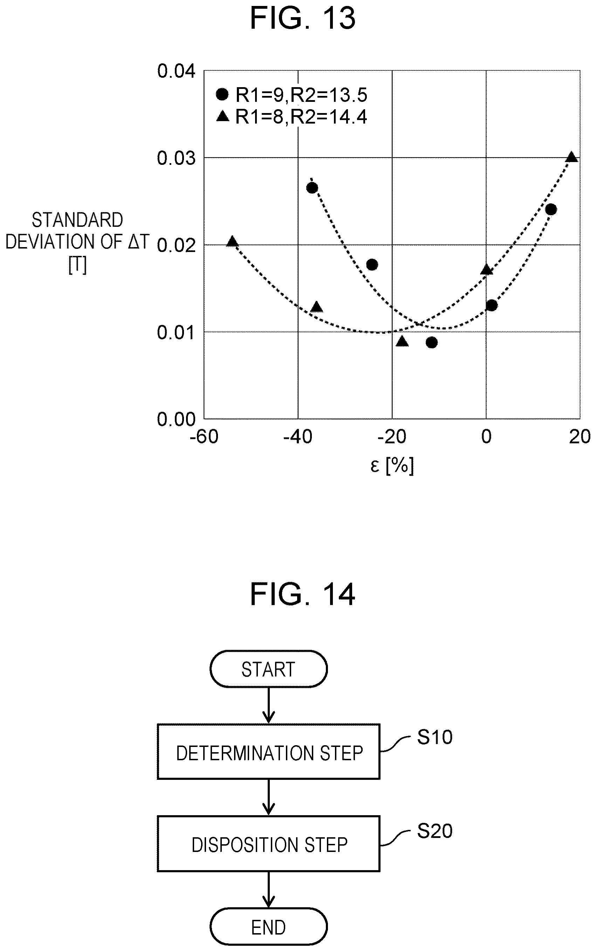

Fig. 12 is a graph illustrating a relationship between position deviation rate $\varepsilon$ and the average value of magnetic flux density difference $\Delta T$ of power generation device 14 according to the present exemplary embodiment. Position deviation rate $\varepsilon$ is a value representing a relative position of center 24c of power generation element 24 with respect to magnet 20. Position deviation rate $\varepsilon$ will be described later. The error bars illustrated in Fig. 12 indicate the standard deviation of each magnetic flux density difference $\Delta T$. Here, the average value and the standard deviation of magnetic flux density difference $\Delta T$ are the average value and the standard deviation of magnetic flux density difference $\Delta T$ with respect to six distances d from distance d = 6 [mm] to distance d = 9.5 [mm]. Fig. 13 is a graph illustrating a relationship between position deviation rate $\varepsilon$ and the standard deviation of magnetic flux density difference $\Delta T$ of power generation device 14 according to the present exemplary embodiment. In Fig. 13, an approximate curve approximated by a second order polynomial is also indicated by a dotted line.

As illustrated in Figs. 10 and 11, when distance r is 5.2 mm, the change of magnetic flux density difference $\Delta T$ with respect to distance d is the smallest. Thus, in the configuration example illustrated in Figs. 10 and 11, by setting distance r to about 5.2 mm, a change in uniformity of the magnetic flux density in power generation element 24 can be suppressed with respect to an assembly error of the position of power generation element 24 in the rotation axis line direction. That is, it is possible to reduce individual differences in magnetic flux density in power generation element 24 due to the influence of the manufacturing error, the assembly error, and the like in the rotation axis line direction of power generation element 24. Thus, it is possible to reduce individual differences in the amount of power generation and the rotation angle at which power is generated in power generation element 24.

As described above, when distance r is set to about 5.2 mm, distance d from power generation element 24 to magnet 20 may be larger than radius R1 of the inner diameter of magnet 20. As a result, as illustrated in Figs. 10 and 11, a change in magnetic flux density difference $\Delta T$ with respect to distance d can be reduced. Thus, it is possible to reduce individual differences in magnetic flux density in power generation element 24 due to the influence of the manufacturing error, the assembly error, and the like in the rotation axis line direction of power generation element 24.

In Figs. 12 and 13, position deviation rate $\varepsilon$ [%] representing the relative position of center 24c of power generation element 24 with respect to magnet 20 is used. Position deviation rate $\varepsilon$ is a value indicating the relative position of center 24c of power generation element 24 with respect to an intermediate position (circumference with radius (R1 + R2)/2 around rotation axis line A) between an inner peripheral edge (circumference with radius R1 around rotation axis line A) and an outer peripheral edge (circumference with radius R2 around rotation axis line A) of magnet 20 as viewed in the rotation axis line direction (see Fig. 4), and is expressed by the formula shown below.

[Mathematical Formula 3]

$$\varepsilon = \frac{r - (R1 + R2)/2}{R2 - R1} \times 100$$

In other words, position deviation rate $\varepsilon$ is a percentage of the ratio of the shift amount of center 24c of power generation element 24 with respect to the intermediate position to width (R2 - R1) of the magnet in the radial direction.

As illustrated with the error bars in Fig. 12 and Fig. 13, the standard deviation of magnetic flux density difference $\Delta T$ can be reduced when position deviation rate $\varepsilon$ is more than or equal to -50% and less than or equal to 0% (that is, when $-50 \leq \varepsilon \leq 0$ holds). In other words, when distance r from rotation axis line A to center 24c of power generation element 24 is more than or equal to radius R1 of the inner diameter of magnet 20 and less than or equal to the average value of radius R1 of the inner diameter of magnet 20 and radius R2 of the outer diameter, the standard deviation of magnetic flux density difference $\Delta T$ can be reduced. Thus, it is possible to suppress a change in uniformity of the magnetic flux density in power generation element 24 with respect to the assembly error of the position in the rotation axis line direction of power generation element 24. Accordingly, it is possible to reduce individual differences between the power generation amount and rotation angle at which power is generated in power generation element 24.

When position deviation rate $\varepsilon$ is more than or equal to -30% and less than or equal to -10% (that is, when $-30 \leq \varepsilon \leq -10$ holds), the standard deviation of magnetic flux density difference $\Delta T$ can be further reduced. Thus, it is possible to further suppress a change in uniformity of the magnetic flux density in power generation element 24 with respect to the assembly error of the position in the rotation axis line direction of power generation element 24.

As illustrated in Fig. 12, as position deviation rate $\varepsilon$ decreases, that is, as distance r from rotation axis line A of power generation element 24 decreases, the absolute value of magnetic flux density difference $\Delta T$ decreases. Thus, the uniformity of the magnetic flux density in power generation element 24 can be enhanced by reducing position deviation rate $\varepsilon$.

Although the disposition of power generation element 24 has been described above, power generation element 26 may also be disposed in the same manner as power generation element 24.

[1-4. Method for manufacturing power generation device]

A method for manufacturing power generation device 14 according to the present exemplary embodiment will be described with reference to Fig. 14. Fig. 14 is a flowchart illustrating a flow of the method for manufacturing power generation device 14 according to the present exemplary embodiment.

As illustrated in Fig. 14, first, the position of center 24c of power generation element 24 is determined based on radius R1 of the inner diameter of magnet 20 and radius R2 of the outer diameter (determination step S10). In this step, the position of center 24c of power generation element 24 is determined such that $-50 \leq \varepsilon \leq 0$ holds with respect to above-described position deviation rate $\varepsilon$.

Subsequently, power generation element 24 and magnet 20 are disposed based on the position determined in determination step S10 (disposition step S20).

Power generation device 14 can be thus manufactured. According to the method for manufacturing power generation device 14 of the present exemplary embodiment, magnetic flux density distribution in power generation element 24 can be made uniform by using magnet 20 having an annular shape centered on rotation axis line A, magnet 20 being magnetized in the radial direction of the annular shape. In addition, by disposing power generation element 24 such that position deviation rate $\varepsilon$ of power generation element 24 is more than or equal to -50% and less than or equal to 0%, a change in uniformity of the magnetic flux density in power generation element 24 can be suppressed with respect to an assembly error of the position in the rotation axis line direction of power generation element 24. Thus, it is possible to reduce individual differences in the amount of power generation and the rotation angle at which power is generated in power generation element 24.

In determination step S10, the position of center 24c of power generation element 24 may be determined such that $-30 \leq \varepsilon \leq -10$ holds with respect to position deviation rate $\varepsilon$. With this configuration, the standard deviation of magnetic flux density difference $\Delta T$ can be further reduced. Thus, it is possible to further suppress a change in uniformity of the magnetic flux density in power generation element 24 with respect to the assembly error of the position in the rotation axis line direction of power generation element 24.

(Second exemplary embodiment)

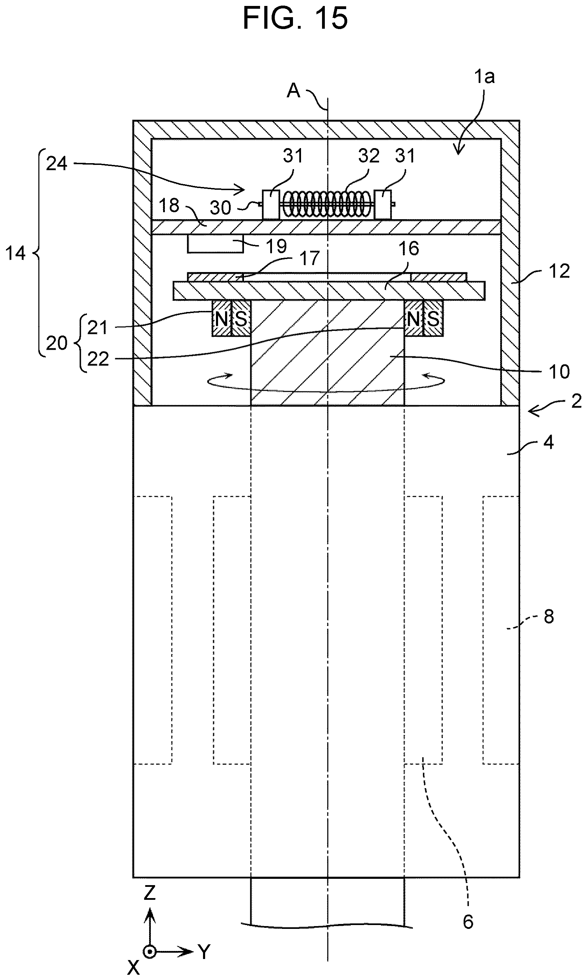

A rotation angle detector according to a second exemplary embodiment will be described. The rotation angle detector according to the present exemplary embodiment is different from rotation angle detector 1 according to the first exemplary embodiment in that the rotation angle detector according to the present exemplary embodiment includes an address information acquisition unit that is driven using the power output from power generation device 14 according to the first exemplary embodiment. Hereinafter, the rotation angle detector according to the present exemplary embodiment will be described with reference to Fig. 15.

Fig. 15 is a schematic sectional view illustrating an overall configuration of rotation angle detector 1a according to the present exemplary embodiment. Fig. 15 also illustrates a side view of motor 2 to which rotation angle detector 1a is attached.

Rotation angle detector 1a is a detector that detects the rotation of rotary shaft 10. Rotation angle detector 1a is provided at one end of rotary shaft 10 in the rotation axis line direction. As illustrated in Fig 15, rotation angle detector 1a includes rotary plate 16, substrate 18, and power generation device 14 in the same manner as in rotation angle detector 1 according to the first exemplary embodiment. Rotation angle detector 1a according to the present exemplary embodiment further includes address information acquisition unit 19 and reflection pattern 17.

Address information acquisition unit 19 is driven by using electromotive force of at least one of power generation element 24 and power generation element 26, and acquires address information corresponding to the rotation angle of magnet 20. In the present exemplary embodiment, address information acquisition unit 19 is disposed on the principal surface of substrate 18 facing rotary plate 16. Address information acquisition unit 19 faces reflection pattern 17 in the rotation axis line direction and emits light toward reflection pattern 17. Address information acquisition unit 19 receives the light reflected by reflection pattern 17. The light reflected by reflection pattern 17 changes according to the rotational position of rotary shaft 10. Address information acquisition unit 19 detects the rotation amount of rotary shaft 10 based on the light reflected by reflection pattern 17. In the present exemplary embodiment, address information acquisition unit 19 corresponds to a light emitting element and a light receiving element.

Reflection pattern 17 is a member that is disposed on the principal surface of rotary plate 16 facing substrate 18 and includes address information corresponding to the rotation angle of magnet 20. Reflection pattern 17 is disposed in the rotation direction of rotary shaft 10 and has an annular shape. For example, reflection pattern 17 has a reflective region that easily reflects light and a non-reflective region that hardly reflects light, and the reflective region and the non-reflective region form address information. For example, the reflective region and the non-reflective region are alternately disposed in the rotation direction of rotary shaft 10.

In the present exemplary embodiment, address information acquisition unit 19 and reflection pattern 17 constitute an optical encoder.

By including address information acquisition unit 19, rotation angle detector 1a according to the present exemplary embodiment can detect the rotation angle with higher accuracy than rotation angle detector 1 according to the first exemplary embodiment.

Rotation angle detector 1a according to the present exemplary embodiment may detect the rotation angle based not only on the address information acquired by address information acquisition unit 19 but also on the outputs of power generation element 24 and power generation element 26 as in the first exemplary embodiment.

(Other exemplary embodiments)

The power generation device, the rotation angle detector, and the method for manufacturing a power generation device according to the present disclosure have been described above based on the exemplary embodiments. However, the present disclosure is not limited to the exemplary embodiments described above. The present disclosure also includes a mode obtained by applying various modifications conceived by those skilled in the art to the above-described exemplary embodiments, and a mode realized by freely combining constituent elements and functions in each exemplary embodiment without departing from the gist of the present disclosure.

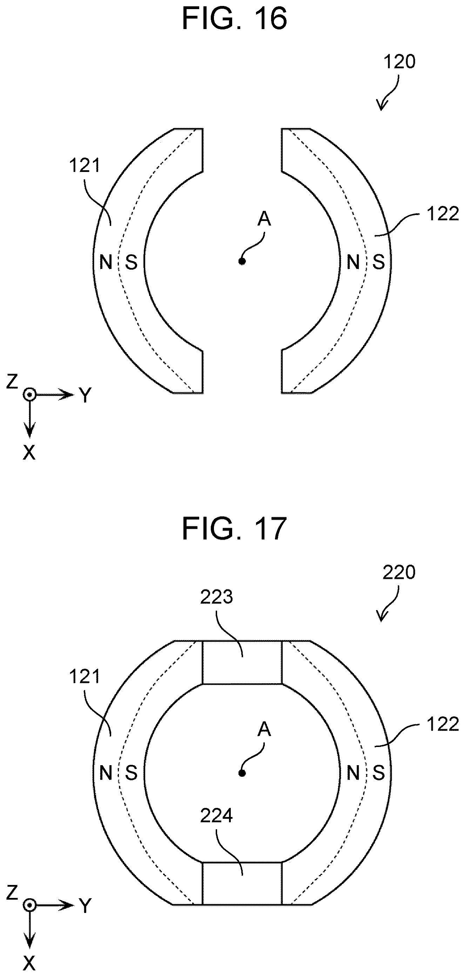

For example, in the above-described exemplary embodiments, magnet 20 has a shape as illustrated in Figs. 1 and 2, but the configuration of the magnet according to the present disclosure is not limited to such a configuration. Hereinafter, a magnet according to a modification will be described with reference to Figs. 16 and 17. Figs. 16 and 17 are schematic plan views illustrating configurations of magnet 120 according to a first modification and magnet 220 according to a second modification, respectively.

As illustrated in Fig. 16, magnet 120 according to the first modification includes first portion 121 and second portion 122. First portion 121 and second portion 122 according to the first modification are different from the first portion 21 and the second portion 22 according to the first exemplary embodiment in that first portion 121 and second portion 122 have an arc shape centered on rotation axis line A and are separated from each other as viewed in the rotation axis line direction. First portion 121 and second portion 122 have predetermined thicknesses in the rotation axis line direction in the same manner as in first portion 21 and second portion 22 according to the first exemplary embodiment. Like magnet 120 according to the first modification, a shape in which only a part of an annular ring is missing is also included in the annular shape. In addition, a shape that is not completely circular but is substantially circular is also included in the annular shape. For example, the shape of magnet 120 in which the distance between one end of first portion 121 and one end of second portion 122 facing the one end is less than or equal to 20% of the circumferential length of first portion 121 or second portion 122 around rotation axis line A is referred to as an annular shape. In magnet 120 having such a configuration as well, the same effects as those of magnet 20 according to the first exemplary embodiment can be obtained.

As illustrated in Fig. 17, magnet 220 according to the second modification includes first portion 121, second portion 122, and magnetic bodies 223 and 224. Magnetic bodies 223 and 224 have the same thickness as first portion 121 and second portion 122 in the rotation axis line direction, for example. Each of magnetic bodies 223 and 224 is connected to an end of first portion 121 and an end of second portion 122. That is, magnetic body 223 is connected to one end of first portion 121 and one end of second portion 122, and magnetic body 224 is connected to the other end of first portion 121 and the other end of second portion 122. In magnet 220 having such a configuration as well, the same effects as those of magnet 20 according to the first exemplary embodiment can be obtained. In addition, according to magnet 220 according to the second modification, it is easy to secure the magnetic flux density in the longitudinal direction of power generation element 24 and power generation element 26. In addition, it is easy to increase the permeance coefficient, and it is easy to suppress a decrease in the magnetic flux density in the longitudinal direction of power generation element 24 and power generation element 26 at high temperature. Thus, appropriate power generation of power generation element 24 and power generation element 26 is likely to be performed.

In the above-described exemplary embodiments, power generation device 14 includes two power generation elements, that is, power generation element 24 and power generation element 26, but power generation device 14 may include a single power generation element or three or more power generation elements. When power generation device 14 includes single power generation element, detection unit 28 of rotation angle detector 1 of the first exemplary embodiment may detect the rotational position of magnet 20 based on only the output of one power generation element. However, when the rotation angle of magnet 20 is detected based on the outputs of two or more power generation elements, the rotation angle can be detected more accurately than when the rotation angle of magnet 20 is detected based on the output of one power generation element.

In the above-described exemplary embodiments, center 24c of power generation element 24 is defined by the center point of magnetic sensing unit 30, but it may be defined by, for example, the center of gravity of magnetic sensing unit 30, the center of gravity of power generation element 24, or the like.

In the above-described exemplary embodiment, each power generation element includes a Wiegand wire, but the configuration of the power generation element is not limited to this. For example, each power generation element may be a coil or the like not having a Wiegand wire.

[Effects and the like]

Hereinafter, an invention obtained from the disclosure of the present specification will be exemplified, and effects and the like obtained from the invention will be described.

Invention 1 includes magnet 20 having an annular shape centered on rotation axis line A, magnet 20 being magnetized in a radial direction of the annular shape and rotatably disposed around rotation axis line A, and power generation element 24 (and power generation element 26) that generates power by using a change in a magnetic field accompanying rotation of magnet (20). In power generation device 14, position deviation rate ε representing a relative position of a center of power generation element 24 with respect to magnet 20 is defined by a formula shown below, where r is a distance from rotation axis line A to the center of power generation element 24, and R1 and R2 are a radius of an inner diameter of magnet 20 and a radius of an outer diameter of magnet 20, respectively,

[Mathematical Formula 4]

$$\varepsilon = \frac{r - (R1 + R2)/2}{R2 - R1} \times 100$$

where $-50 \leq \varepsilon \leq 0$ holds for position deviation rate ε.

Magnetic flux density distribution in power generation element 24 can be made uniform by using magnet 20 having an annular shape centered on rotation axis line A, magnet 20 being magnetized in the radial direction of the annular shape like this. In addition, by disposing power generation element 24 such that position deviation rate ε of power generation element 24 is more than or equal to -50% and less than or equal to 0%, a change in uniformity of the magnetic flux density in power generation element 24 can be suppressed with respect to an assembly error of the position in the rotation axis line direction of power generation element 24. Thus, it is possible to reduce individual differences in the amount of power generation and the rotation angle at which power is generated in power generation element 24.

Invention 2 is power generation device 14 according to Invention 1 wherein $-30 \leq \varepsilon \leq -10$ holds for position deviation rate ε.

By disposing power generation element 24 such that position deviation rate ε of power generation element 24 is more than or equal to -30% and less than or equal to 10% like this, a change in uniformity of the magnetic flux density in power generation element 24 can be further suppressed with respect to an assembly error of the position in the rotation axis line direction of power generation element 24.

Invention 3 is power generation device 14 according to Invention 1 or 2, wherein an output of power generation element 24 changes according to a change in a direction of a magnetic field accompanying the rotation of magnet 20 in power generation element 24.

With this configuration, power generation element 24 can detect a change in relative position (rotation angle) with respect to magnet 20 based on the change in magnetic field.

Invention 4 is power generation device 14 according to any one of Inventions 1 to 3, wherein power generation element 24 includes a magnetic member that generates a large Barkhausen effect by using a change in an external magnetic field.

With this configuration, power generation element 24 can have both a power generation function and a magnetic detection function.

Invention 5 is power generation device 14 according to any one of Inventions 1 to 4, wherein a distance from power generation element 24 to magnet 20 is larger than the radius of the inner diameter of magnet 20.

With this configuration, it is possible to reduce individual differences in magnetic flux density in power generation element 24 due to the influence of the manufacturing error, the assembly error, and the like in the rotation axis line direction of power generation element 24. In addition, it is possible to reduce individual differences in magnetic flux density in power generation element 24 due to the influence of the assembly error of distance r and the like of power generation element 24.

Invention 6 is rotation angle detector 1a including power generation device 14 according to any one of Inventions 1 to 5 and address information acquisition unit 19 that is driven using an electromotive force of power generation element 24 and acquires address information corresponding to a rotation angle of magnet 20.

With this configuration, the rotation angle can be detected with higher accuracy than when the rotation angle of magnet 20 is detected by using only power generation element 24.

Invention 7 is rotation angle detector 1 including power generation device 14 according to any one of Inventions 1 to 5 and detection unit 28 that detects a rotation angle of magnet 20 based on an output of power generation element 24.

With this configuration, the rotation angle of magnet 20 can be detected with a simplified configuration.

Invention 8 is a method for manufacturing power generation device 14. Power generation device 14 includes magnet 20 having an annular shape centered on rotation axis line A, magnet 20 being magnetized in a radial direction of the annular shape and rotatably disposed around rotation axis line A, and power generation element 24 (and power generation element 26) that generates power by using a change in a magnetic field accompanying rotation of magnet 20. The method for manufacturing power generation device 14 includes a determination step of determining a position of a center of power generation element 24 based on a radius of an inner diameter of magnet 20 and a radius of an outer diameter of magnet 20, and a disposition step of disposing power generation element 24 and magnet 20 based on the position determined in the determination step. In the method for manufacturing power generation device 14, position deviation rate ε representing a relative position of the center of power generation element 24 with respect to magnet 20 is defined by a formula shown below, where r is a distance from rotation axis line A to the center of power generation element 24, and R1 and R2 are the radius of the inner diameter of magnet 20 and the radius of the outer diameter of the magnet, respectively,

[Mathematical Formula 5]

$$\varepsilon = \frac{r - (R1 + R2)/2}{R2 - R1} \times 100$$

and in the determination step, the position of the center of power generation element 24 is determined to hold $-50 \leq \varepsilon \leq 0$ for position deviation rate ε.

As a result, the same effect as Invention 1 can be achieved.

INDUSTRIAL APPLICABILITY

The power generation device, the rotation angle detector, and the method for manufacturing a power generation device according to the present disclosure can be used for a rotation angle detector that detects rotation of a rotary shaft or the like of a motor that rotationally drives a load.

REFERENCE MARKS IN THE DRAWINGS

1, 1a: rotation angle detector
2: motor
4: body
6: rotor
8: stator
10: rotary shaft
12: case
14: power generation device
16: rotary plate
17: reflection pattern
18: substrate
19: address information acquisition unit
20, 120, 220: magnet
20c, 24c: center
21, 121: first portion
22, 122: second portion
24, 26: power generation element
28: detection unit
30, 34: magnetic sensing unit
32, 36: coil
223, 224: magnetic body
A: rotation axis line

**Claims**

1. A power generation device comprising:

   a magnet having an annular shape centered on a rotation axis line, the magnet being magnetized in a radial direction of the annular shape and disposed rotatably around the rotation axis line; and
   a power generation element that generates power by using a change in a magnetic field accompanying rotation of the magnet, wherein

   $$\varepsilon = \frac{r - (R1 + R2)/2}{R2 - R1} \times 100$$

   and

   $$-50 \leq \varepsilon \leq 0$$

   are satisfied,
   where $\varepsilon$ is a position deviation rate that represents a relative position of a center of the power generation element with respect to the magnet,
   r is a distance from the rotation axis line to the center of the power generation element,
   R1 is a radius of an inner diameter of the magnet, and
   R2 is a radius of an outer diameter of the magnet.

2. The power generation device according to Claim 1, wherein
   $-30 \leq \varepsilon \leq -10$ is satisfied.

3. The power generation device according to Claim 1 or 2, wherein
   an output of the power generation element changes according to a change in a direction of a magnetic field accompanying the rotation of the magnet in the power generation element.

4. The power generation device according to Claim 1 or 2, wherein
   the power generation element includes a magnetic member that generates a large Barkhausen effect by using a change in an external magnetic field.

5. The power generation device according to Claim 1 or 2, wherein
   a distance from the power generation element to the magnet is larger than the radius of the inner diameter of the magnet.

6. A rotation angle detector comprising:

   the power generation device according to Claim 1 or 2; and
   an address information acquisition unit that is driven using an electromotive force of the power generation element and acquires address information corresponding to a rotation angle of the magnet.

7. A rotation angle detector comprising:

   the power generation device according to Claim 1 or 2; and
   a detection unit that detects a rotation angle of the magnet based on an output of the power generation element.

8. A method for manufacturing a power generation device,
   the power generation device including:

   a magnet having an annular shape centered on a rotation axis line, the magnet being magnetized in a radial direction of the annular shape and rotatably disposed around the rotation axis line; and
   a power generation element that generates power by using a change in a magnetic field accompanying rotation of the magnet,

the method for manufacturing a power generation device comprising:

a determination step of determining a position of a center of the power generation element based on a radius of an inner diameter of the magnet and a radius of an outer diameter of the magnet; and
a disposition step of disposing the power generation element and the magnet based on the position determined in the determination step, wherein
a position deviation rate $\varepsilon$ representing a relative position of the center of the power generation element with respect to the magnet is defined by a formula shown below, where r is a distance from the rotation axis line to the center of the power generation element, and R1 and R2 are the radius of the inner diameter of the magnet and the radius of the outer diameter of the magnet, respectively,

[Mathematical Formula 2]

$$\varepsilon = \frac{r - (R1 + R2)/2}{R2 - R1} \times 100$$

and in the determination step, the position of the center of the power generation element is determined to hold $-50 \leq \varepsilon \leq 0$ for the position deviation rate $\varepsilon$.

# FIG. 1

# FIG. 2

# FIG. 3

# FIG. 4

# FIG. 5

# FIG. 6

(a)

(b)

MAGNETIC FLUX DENSITY IN LONGITUDINAL DIRECTION OF MAGNETIC SENSING PART [T]

POSITION IN LONGITUDINAL DIRECTION OF MAGNETIC SENSING PART     [mm]

# FIG. 7

(a)

(b)

MAGNETIC FLUX DENSITY IN LONGITUDINAL DIRECTION OF MAGNETIC SENSING PART [T]

POSITION IN LONGITUDINAL DIRECTION OF MAGNETIC SENSING PART [mm]

# FIG. 8

(a)

(b)

MAGNETIC FLUX DENSITY IN LONGITUDINAL DIRECTION OF MAGNETIC SENSING PART [T]

POSITION IN LONGITUDINAL DIRECTION OF MAGNETIC SENSING PART [mm]

# FIG. 9

# FIG. 10

## FIG. 11

R1=9,R2=13.5

r=4.4
r=4.8
r=5.2
r=5.6
r=6.0

ΔT [T]

DISTANCE d [mm]

## FIG. 12

R1=9,R2=13.5

R1=8,R2=14.4

ΔT AVERAGE
VALUE
[T]

ε [%]

# FIG. 13

# FIG. 14

# FIG. 15

# FIG. 16

# FIG. 17

## INTERNATIONAL SEARCH REPORT

International application No.

**PCT/JP2024/000961**

| A. | CLASSIFICATION OF SUBJECT MATTER |
|---|---|

*G01D 5/245*(2006.01)i; *G01D 5/244*(2006.01)i; *H02K 47/20*(2006.01)i
FI:    G01D5/245 W; G01D5/244 E; H02K47/20

According to International Patent Classification (IPC) or to both national classification and IPC

| B. | FIELDS SEARCHED |
|---|---|

Minimum documentation searched (classification system followed by classification symbols)

G01D5/00-5/252,5/39-5/62; H02K47/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2016/010141 A1 (NIKON CORPORATION) 21 January 2016 (2016-01-21) paragraphs [0011]-[0033], [0061]-[0115], fig. 1, 2, 5-14 | 1-8 |
| A | WO 2023/276488 A1 (PANASONIC INTELLECTUAL PROPERTY MANAGEMENT CO., LTD.) 05 January 2023 (2023-01-05) | 1-8 |
| A | WO 2020/250439 A1 (MITSUBISHI ELECTRIC CORPORATION) 17 December 2020 (2020-12-17) | 1-8 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000961**

| Patent document cited in search report | | | Publication date (day/month/year) | Patent family member(s) | | | Publication date (day/month/year) |
|---|---|---|---|---|---|---|---|
| WO | 2016/010141 | A1 | 21 January 2016 | JP | 2018-105894 | A | |
| | | | | CN | 106537093 | A | |
| WO | 2023/276488 | A1 | 05 January 2023 | (Family: none) | | | |
| WO | 2020/250439 | A1 | 17 December 2020 | JP | 6647478 | B1 | |
| | | | | KR | 10-2021-0139475 | A | |
| | | | | CN | 113939714 | A | |

Form PCT/ISA/210 (patent family annex) (July 2022)

**REFERENCES CITED IN THE DESCRIPTION**

**Patent documents cited in the description**

- JP 6336232 B